# EUROPÄISCHE PATENTSCHRIFT

(11) **EP 3 466 245 B1**
(45) Veröffentlichungstag und Bekanntmachung des Hinweises auf die Patenterteilung: **24.09.2025**
(21) Anmeldenummer: 18185662.6
(22) Anmeldetag: 26.07.2018
(51) Int. Cl.: A01F 12/56, A01D 69/06, F16G 5/08, F16G 5/20, F16H 7/12

(54) **VERBUNDRIEMEN, VERWENDUNG EINES VERBUNDRIEMENS SOWIE RIEMENTRIEB EINES SELBSTFAHRENDEN MÄHDRESCHERS**
COMPOSITE BELT, USE OF A COMPOSITE BELT AND BELT DRIVE OF A SELF-PROPELLED COMBINE HARVESTER
COURROIE COMPOSITE, UTILISATION D'UNE COURROIE COMPOSITE AINSI QU'ENTRAÎNEMENT DE COURROIE D'UNE MOISSONNEUSE-BATTEUSE AUTOMOTRICE

(30) Priorität: 29.09.2017 DE 102017122714
(43) Veröffentlichungstag der Anmeldung: 10.04.2019
(73) Patentinhaber: CLAAS Selbstfahrende Erntemaschinen GmbH, 33428 Harsewinkel (DE)
(72) Erfinder: Hubert, Raik-Manfred, 31195 Lamspringe (DE)
(74) Vertreter: CLAAS Gruppe

(56) Entgegenhaltungen:
- EP-A1- 0 457 164
- EP-A1- 3 135 956
- CN-Y- 201 145 000
- GB-A- 1 480 566
- US-A- 3 948 113
- US-A1- 2017 273 243
- ANONYMOUS: "BELT DRIVE SYSTEMS MAINTENANCE FREE 35% REDUCED DRIVE COST 67% REDUCED DRIVE WIDTH 50% REDUCED DRIVE WEIGHT", 23 November 2015 (2015-11-23), XP055562193, Retrieved from the Internet <URL:https://web.archive.org/web/20151123024838if_/http://www.gatesaustralia.com.au:80/~/media/files/gates-au/industrial/brochures-and-marketing-collateral/predator-brochure-aus--nz-july-2012.pdf> [retrieved on 20190226]
- ANONYMOUS: "A comprehensive product range A comprehensive product range A comprehensive product range GATES INDUSTRIAL POWER TRANSMISSION", 17 August 2014 (2014-08-17), XP055562231, Retrieved from the Internet <URL:https://web.archive.org/web/20140817114326if_/http://www.uzimex.cz:80/soubory/20070621_gates_katalog_en.pdf> [retrieved on 20190226]

## Beschreibung

Die Erfindung betrifft einen Verbundriemen, umfassend eine Decklage und drei mit dieser in Kraft übertragender Weise verbundene Rippen, wobei jede Rippe im Querschnitt die Form eines symmetrischen Trapezes besitzt, das jeweils mit seiner Basis an eine längere Seite eines Rechtecks anschließt, das wiederum einen Querschnitt der Decklage bildet, und wobei jede Rippe in einem der Basis zugewandten Oberbau und in einem der Basis abgewandten Unterbau jeweils ein Elastomermaterial sowie zwischen dem Oberbau und dem Unterbau eine Mehrzahl von jeweils parallel zueinander und jeweils in Längsrichtung des Verbundriemens verlaufenden Zugsträngen aufweist.

Des Weiteren betrifft die Erfindung die Verwendung eines solchen Verbundriemens in einem Riementrieb eines selbstfahrenden Mähdreschers, insbesondere in einem eine Dreschtrommel antreibenden Riementrieb.

Schließlich betrifft die Erfindung einen Riementrieb eines selbstfahrenden Mähdreschers, insbesondere einen eine Dreschtrommel antreibenden Riementrieb.

Die eingangs beschriebenen Verbundriemen, die auch als "Verbundkeilriemen" oder "Kraftbänder" bezeichnet werden, stellen einen Verbund einer Mehrzahl von (Schmal-) Keilriemen dar, wobei die einzelnen Keilriemen parallel nebeneinander angeordnet und durch die Decklage, auch Riemenrücken genannt, miteinander verbunden sind. Der Vorteil von Verbundkeilriemen gegenüber einer entsprechenden Mehrzahl von Einzelriemen ist die Vermeidung einer Verdrehung durch die laterale Kopplung, wodurch eine absolut gleichmäßige Kraftverteilung auf alle einzelnen Rippen (entsprechend den Einzelriemen) gewährleistet ist. Hieraus resultieren eine geringe Anfälligkeit gegenüber Schwingungen und Stößen sowie eine hohe Bruchlast und Belastbarkeit sowie eine lange Lebensdauer. Insbesondere sind derartige Verbundriemen auch für große Achsabstände der Riemenscheiben geeignet, was sie auch für den Einsatz in großen landwirtschaftlichen Maschinen, wie beispielsweise selbstfahrenden Mähdreschern, prädestiniert.

Die DE 10 2013 103 450 A1 offenbart ein als Riementriebe ausgebildetes Antriebssystem eines selbstfahrenden Mähdreschers, wobei in bestimmten Riementrieben auch Verbundriemen mit drei Rippen eingesetzt werden. Üblicherweise stehen die diversen drehend angetriebenen Einrichtungen, insbesondere die Dresch- und Trenneinrichtungen sowie eine Strohhäckseleinrichtung, über diverse Riementriebe mit einem Abtrieb einer meist als Dieselmotor ausgeführten Brennkraftmaschine in Verbindung. Im Fall der DE 10 2013 103 450 wird ein erster Hauptriementrieb vorgeschlagen, der die Hauptantriebsscheibe, eine erste Vorgelegestufe und eine zweite Vorgelegestufe enthält. Um einen funktionssicheren Antrieb der Einrichtung zur Restkornabscheidung, des Stohhäckslers sowie von leistungsstarken Erntevorsätzen zu gewährleisten, wird vorgeschlagen, dass die erste Vorgelegestufe über einen ersten Riementrieb unmittelbar die Einrichtung zur Restkornabscheidung und über einen zweiten Riementrieb den Strohhäcksler antreibt. Außerdem soll die zweite Vorgelegestufe trieblich mit Antrieben eines Erntevorsatzes und einer Reinigungsvorrichtung verbunden sein. Verbesserungsbedarf besteht bei dem bekannten Mähdrescher und dem dort realisierten Riementrieb-Antriebssystem im Hinblick auf die Riementriebe zum Antrieb der Dreschtrommel sowie im Hinblick auf die Qualität der für den vorgenannten Riementrieb verwendeten Verbundriemen. Weitere Verbundriemen sind aus den Veröffentlichungen XP055562193 - "BELT DRIVE SYSTEMS, MAINTENANCE FREE, 35% REDUCED DRIVE COST, 67% REDUCED DRIVE WIDTH; 50% REDUCED DRIVE WEIGHT", XP055562231 - "GATES INDUSTRIAL POWER TRANSMISSION - A comprehensive product range" und US 3 948 113 A bekannt.

Der Erfindung liegt die Aufgabe zugrunde, einen Verbundriemen zur Verwendung in einem Riementrieb eines Antriebssystems eines selbstfahrenden Mähdreschers vorzuschlagen, der sich durch eine große übertragbare Leistung sowie geringe Herstellkosten auszeichnet. Darüber hinaus soll ein Riementrieb zum Antrieb einer Dreschtrommel eines selbstfahrenden Mähdreschers bereitgestellt werden, der sich durch eine hohe Leistungsdichte auf begrenztem Bauraum sowie eine Effizienzsteigerung durch eine hohe Riemenauslastung auszeichnet.

Ausgehend von einem Verbundriemen mit den Merkmalen des Oberbegriffs des Anspruchs 1 wird die Aufgabe in Verbindung mit den kennzeichnenden Merkmalen dieses Anspruchs gelöst. Dementsprechend beträgt die Länge des Verbundriemens zwischen 3.500 mm und 4.000 mm, die Bruchlast des Verbundriemens 67.500 N und die von dem Verbundriemen im Dauerbetrieb übertragbare Leistung mindestens 75 kW.

Ein derartiger Riemen greift auf ein bekanntes und vielfach bewährtes Prinzip der dreirippigen Verbundriemen zurück und wirft somit hinsichtlich der Herstellbarkeit und der Herstellungskosten keine besonderen Probleme auf. Gleichwohl besitzt er mit seiner speziellen Länge, der genannten Mindest-Riemen-Bruchlast, die einer Bruchlast einer einzelnen Rippe (entsprechend einem Einzelriemen) von 22.500 N entspricht und seiner im Dauerbetrieb mindestens übertragbaren Leistung eine Merkmalskombination, mit der sich besonders bauraumsparende und effiziente Riementriebe für den Dreschtrommel-Antrieb eines selbstfahrenden Mähdreschers realisieren lassen. So ermöglicht die gewählte Länge eine besonderes vorteilhafte Anordnung der Achsen der einzelnen Riemenscheiben bzw. Spannrolle des Riementriebs zueinander sowie besonders große Umschlingungswinkel, wodurch die sicher und schlupffrei übertragbaren Riemenkräfte bzw. die daraus resultierenden Drehmomente besonders hoch sind. Es ergibt sich folglich eine besonders große Leistungsdichte eines mit dem erfindungsgemäßen Verbundriemen ausgestatteten Riementriebs. Gleichwohl entfernt sich der Verbundriemen gemäß der Erfindung bewusst nicht übermäßig weit von bekannten Verbundriemen, um die bestehenden Fertigungsmethoden und die verwendeten Materialien für die einzelnen Komponenten des Verbundriemens zum großen Teil weiter verwenden zu können. Es besteht somit bei dem erfindungsgemäßen Verbundriemen nicht die Notwendigkeit, durchweg absolute "Hochleistungsmaterialien" zu verwenden oder auf Herstellverfahren mit hochkomplizierten möglicherweise nur schwer beherrschbaren Prozessen oder besonders aufwändigen Schritten zurückgreifen zu müssen.

Vorzugsweise beträgt eine maximale Längung des Verbundriemens nach einem Betrieb mit einer von dem Verbundriemen übertragenen Mindestdauerleistung von 75 kW und über einen Zeitraum von 200 Stunden 1 % der Länge des Verbundriemens im Neuzustand.

Besonders vorteilhaft ist eine Länge des erfindungsgemäßen Verbundriemens zwischen 3.700 mm und 3.900 mm, weiter vorzugsweise zwischen 3.750 mm und 3.850 mm. Ganz besonders vorteilhaft ist eine Länge von 3.790 mm.

Um große Riemenkräfte mit vergleichsweise kleiner Riemen-Querschnittsfläche übertragen zu können, kann vorgesehen sein, dass zumindest ein Teil der Zugstränge Filamente enthält, die zumindest zum Teil aus einem aromatischen Polyamid, insbesondere hochfestem Aramid, und/oder Karbon bestehen. Derartige Filamente besitzen eine besonders große Reißfestigkeit und gleichzeitig eine hohe Flexibilität, um auch kleine Krümmungsradien beim Betrieb des erfindungsgemäßen Verbundriemens in einem Riementrieb zu ermöglichen.

Die vorliegende Erfindung bezieht sich gleichfalls auf einen Riementrieb für einen selbstfahrenden Mähdrescher, insbesondere einen eine Dreschtrommel antreibenden Riementrieb.

Der erfindungsgemäße Riementrieb weist eine als Abtrieb dienende Doppelriemenscheibe auf, die mit einer Dreschtrommelwelle gekoppelt ist, wobei der Verbundriemen auf eine einen größeren Durchmesser aufweisende Riemenscheibe der Doppelriemenscheibe wirkt. Des Weiteren weist der Riementrieb eine als Antrieb dienende Riemenscheibe auf, die zumindest indirekt mittels einer Brennkraftmaschine antreibbar ist, und eine in einem Leertrum angeordnete Spannrolle, die vollständig innerhalb einer Hüllkurve des Riementriebs - betrachtet ohne die Spannrolle - angeordnet ist.

Wiederum ergibt sich auf diese Weise ein Riementrieb mit hervorragender Leistungsdichte und Kompaktheit. Der für diesen Riementrieb verwendete erfindungsgemäße Verbundriemen stellt ein maßgeschneidertes Zugmittel dar, das einen hervorragenden Kompromiss zwischen Leistungsfähigkeit und Haltbarkeit einerseits und geringen Herstellkosten und Rückgriff auf grundsätzlich bekannte Technologie im Herstellverfahren andererseits darstellt.

Besonders vorteilhaft ist der vorgenannte Riementrieb, wenn ein Umschlingungswinkel an der den größeren Durchmesser aufweisenden Riemenscheibe der Doppelriemenscheibe größer als 250° und/oder ein Umschlingungswinkel an der mittels der Brennkraftmaschine antreibbaren Riemenscheibe größer 200° ist und/oder ein Umschlingungswinkel an der Spannrolle größer als 80° ist.

Eine hervorragende Kompaktheit des Riementriebs lässt sich in diesem Zusammenhang dann erzielen, wenn der Abstand der Achse der Spannrolle von einer Verbindungsgerade zwischen der Achse der Doppelriemenscheibe und der Achse der mittels der Brennkraftmaschine antreibbaren Riemenscheibe kleiner als 120 mm, vorzugsweise kleiner als 100 mm, ist.

Die Erfindung wird nachfolgend anhand jeweils eines Ausführungsbeispiels sowohl eines Verbundriemens als auch eines Riementriebs näher erläutert. Es zeigt:
- Fig. 1:: einen Querschnitt durch einen Verbundriemen,
- Fig. 2:: eine Seitenansicht in Fahrtrichtung rechts eines selbstfahrenden Mähdreschers mit Darstellung eines Vorbeschleunigungstrommel-Antriebs sowie eines Dreschtrommel-Antriebs und
- Fig. 3:: den Dreschtrommel-Antrieb gemäß Figur 4.

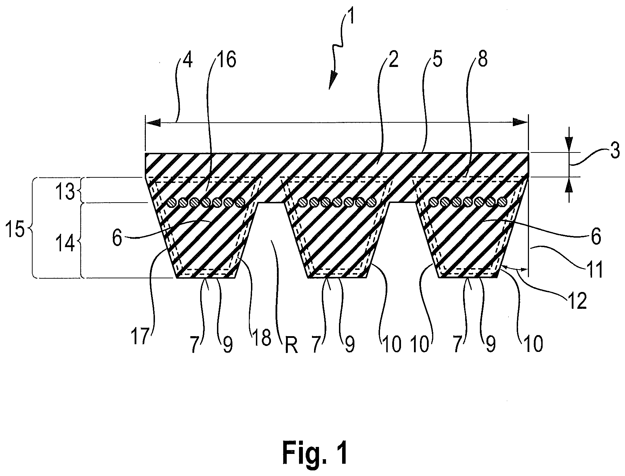

Ein in Figur 1 im Querschnitt dargestellter Verbundriemen 1 (Verbundkeilriemen) besteht aus einer im Querschnitt flach rechteckförmigen Decklage 2 mit einer Dicke 3 und einer Breite 4. Die Dicke 3 beträgt 13 ± 2 mm und die Breite 4 beträgt 55 ± 2 mm. Eine Oberfläche 5 der Decklage 2 bildet einen so genannten Rücken des Verbundriemens 1. Eine Längsrichtung des Verbundriemens verläuft senkrecht zur Zeichnungsebene.

Die Decklage 4 bildet einen Verbund mit drei parallel zueinander verlaufenden, im Querschnitt jeweils trapezförmigen Rippen 6, die sich von einer der Oberfläche 5 gegenüber liegenden Oberfläche 7 erstrecken. Zwischen den Rippen 6 befinden sich zwei gleichfalls trapezförmige Rillen R. Die den Querschnitt der Rippen 6 bildenden Trapeze besitzen jeweils eine Basis 8 und jeweils eine parallel hierzu verlaufende, der Basis 8 gegenüber liegende Grundseite 9, die jeweils eine der Oberfläche 5 gegenüber liegende Oberfläche 7 des Verbundriemens 1 begrenzt. Die jeweiligen Schenkel 10 der beiden Trapeze schließen mit einer zu der Oberfläche 7 senkrecht verlaufenden Geraden 11 jeweils einen Winkel 12 von 39 ± 3° ein.

Die Decklage 2 besteht aus einem Elastomermaterial in Form von gewebeverstärktem Chloropren.

Der Querschnitt der Rippen 6 kann aufgeteilt werden in einen der Decklage 2 zugewandten Oberbau 13 und einem sich von der Grundseite 9 bis an den Oberbau 13 heran erstreckenden Unterbau 14. Die Summe aus der Höhe des Oberbaus 13 und der Höhe des Unterbaus 14 entspricht somit der Gesamthöhe 15 der Rippe 6.

In einer jeden Rippe 6 befinden sich zwischen dem Oberbau 13 und dem Unterbau 14 und jeweils zur Hälfte von diesen umschlossene Zugstränge 16, die parallel zueinander angeordnet sind und innerhalb einer Ebene verlaufen, die parallel zu der den Rücken bildenden Oberfläche 5 ausgerichtet ist. Im vorliegenden Fall sind jeweils mindestens 6 Zugstränge 16 pro Rippe 6 vorhanden. Jeder Zugstrang 16 besteht aus einem Multifilamentfaden mit einem Durchmesser von 1,9 mm bis 2,0 mm. Die Einzelfilamente, die den jeweiligen Zugstrang 16 bilden, bestehen aus aromatischem Polyamid, insbesondere hochfestem Aramid.

Der Unterbau 14 jeder Rippe 6 besteht aus einem Elastomermaterial in Form von faserverstärktem Chloropren.

Darüber hinaus ist jede Rippe 6 an ihren Außenseiten mit zwei Ummantelungen 17, 18 aus einem Gewebe versehen. Die äußere Ummantelung 17 bildet im Querschnitt sowohl die Grundseite 9 als auch die Basis 8 als auch die beiden Schenkel 10 ("Flanken" des Verbundriemens 1) des Trapezes. Die innere Ummantelung 18 befindet sich in sehr geringem Abstand innerhalb der äußeren Ummantelung 17.

Die (gestreckte) Länge des einen in sich geschlossenen Ring bildenden Verbundriemens 1 beträgt 3.790 mm (für einen Dreschtrommel-Antrieb).

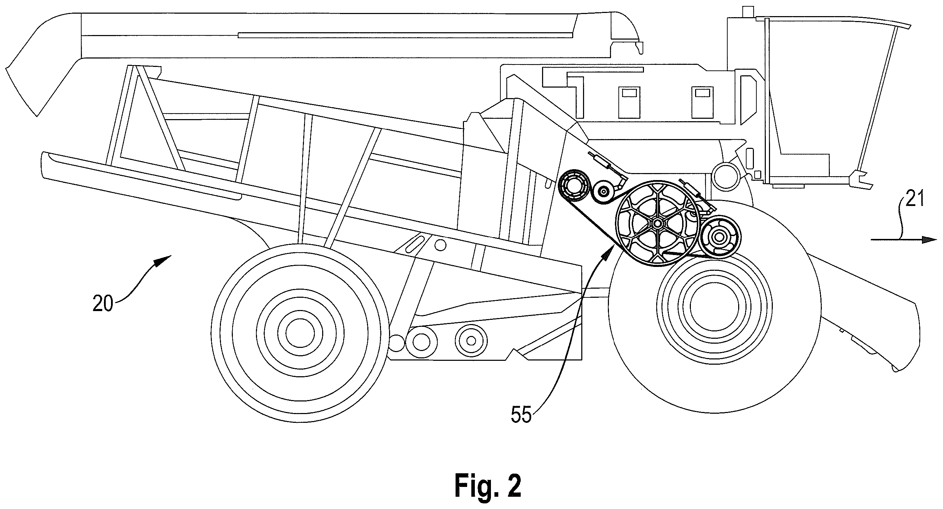

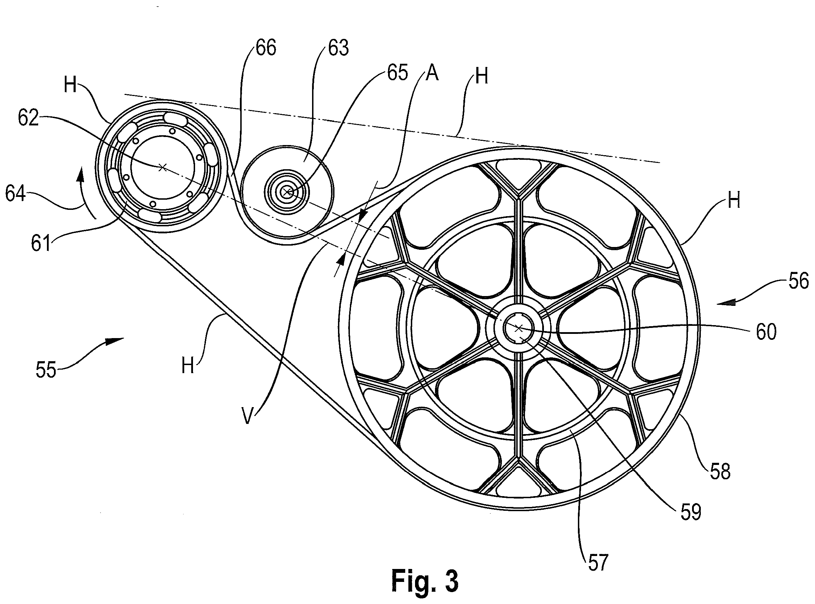

Ein in Figur 2 schematisch dargestellter selbstfahrender Mähdrescher 20 besitzt grundsätzlich einen aus dem Stand der Technik bekannten Aufbau, weist allerdings insbesondere im Hinblick auf die Riementriebe zum Antrieb einer Dreschtrommel sowie einer Vorbeschleunigungstrommel eine erfindungsgemäße, besondere Ausgestaltung auf. In Figur 2 ist die Lage eines in Fahrtrichtung 21 auf der rechten Seite angeordneten Riementriebs 55 zum Antrieb einer Dreschtrommel veranschaulicht. Aus Figur 2 kann darüber hinaus in schematischer Weise auch die Position eines Riementriebs entnommen werden, der zum Antrieb einer Vorbeschleunigungstrommel dient, dessen Aufbau und Funktionsweise im vorliegenden Fall aber nicht weiter von Relevanz sind. Weitere Einzelheiten des Aufbaus des Riementriebs 55 ergeben sich aus Figur 3:

Im vorliegenden Fall beträgt der Durchmesser der beiden Riemenscheiben 23, 24 jeweils 350 mm, der Durchmesser der Spannrolle 173 mm. Der Umschlingungswinkel an der Riemenscheibe 23 beträgt 228°, an der Riemenscheibe 24 222° und an der Spannrolle 90°.

Ein Abstand zwischen der Achse 25 der Riemenscheibe 23 und der Achse 31 der Riemenscheibe 24 beträgt 685 mm. Ein Abstand zwischen der Achse 25 der Riemenscheibe 23 und der Achse 32 der Spannrolle 28 beträgt 325 mm. Ein Abstand zwischen der Achse 32 der Spannrolle 28 und der Achse 31 der Spannrolle 24 beträgt 326 mm. Wie bereits zuvor ausgeführt beträgt die Länge des Verbundriemens 2.640 mm.

Der Riementrieb 55 umfasst eine Doppelriemenscheibe 56, die eine Riemenscheibe 57 mit kleinerem Durchmesser und eine Riemenscheibe 58 mit größerem Durchmesser umfasst und als einstückiges Verbundbauteil ausgeführt ist, so dass die beiden Riemenscheiben 56, 57 nicht voneinander trennbar sind. Die beiden Riemenscheiben 56, 57, d.h. die Doppelriemenscheibe 56, besitzen eine gemeinsame Nabe 58, die eine Dreschtrommelwelle 59, die um die Achse 60 drehbar ist, aufnimmt. Der Verbundriemen 1 läuft außerdem um eine Riemenscheibe 61 mit einer Achse 62, wobei die Riemenscheibe 61 über ein nicht dargestelltes Hauptgetriebe mittels einer Brennkraftmaschine antreibbar ist.

Außerdem läuft der Verbundriemen 1 in einem Leertrum 66 des Riementrieb 55 mit seiner den Rücken bildenden Oberfläche 5 um eine Spannrolle 63, die in dem Riementrieb 55, mit einer nicht näher beschriebenen, aber bekannten Spanneinrichtung versehen ist, um eine bestimmte Riemenspannung zu erreichen.

Die Laufrichtung des Verbundriemens 1 bzw. Drehrichtung der Riemenscheibe 61 bzw. Doppelriemenscheibe 56 ist durch den Pfeil 64 veranschaulicht.

In dem Riementrieb 55 beträgt der Umschlingungswinkel an der Riemenscheibe 58 der Doppelriemenscheibe 56 250°, der Umschlingungswinkel an der Riemenscheibe 61 214° und der Umschlingungswinkel an der Spannrolle 63 104°. Ein Abstand zwischen der Achse 60 der Doppelriemenscheibe 56 und der Achse 62 der Riemenscheibe 61 beträgt 875 mm. Ein Abstand der Achse 65 der Spannrolle 63 zu der Achse 62 der Riemenscheibe 61 beträgt 286 mm und zu der Achse 60 der Doppelriemenscheibe 56 600 mm. Die Länge des Verbundriemens 1 des Riementriebs 55 beträgt 3.790 mm.

Ein Abstand A der Achse 65 der Spannrolle 63 von einer Verbindungsgeraden V durch die Achse 62 der Riemenscheibe 61 und die Achse 6 der Doppelriemenscheibe 56 beträgt 66 mm. Die Spannrolle 63 liegt vollständig innerhalb einer Hüllkurve H des Riementriebs 55 - betrachtet ohne die Spannrolle 63. Die Hüllkurve H besteht aus jeweils den Abschnitten der beiden Tangenten an die Doppelriemenscheibe 56 und die Riemenscheibe 61 sowie den ergänzenden ungefähr halbkreisförmigen Abschnitten des Verbundriemens 1 an der Doppelriemenscheibe 56 und der Riemenscheibe 61.

### Bezugszeichenliste

- 1: Verbundriemen
- 2: Decklage
- 3: Dicke
- 4: Breite
- 5: Oberfläche
- 6: Rippe
- 7: Oberfläche
- 8: Basis
- 9: Grundseite
- 10: Schenkel
- 11: Gerade
- 12: Winkel
- 13: Oberbau
- 14: Unterbau
- 15: Gesamthöhe
- 16: Zugstrang
- 17: Ummantelung
- 18: Ummantelung
- 20: Mähdrescher
- 21: Fahrtrichtung
- 55: Riementrieb
- 56: Doppelriemenscheibe
- 57: Riemenscheibe
- 58: Nabe
- 59: Dreschtrommelwelle
- 60: Achse
- 61: Riemenscheibe
- 62: Achse
- 63: Spannrolle
- 64: Pfeil
- 65: Achse
- 66: Leertrum

- A: Abstand
- H: Hüllkurve
- R: Rille
- V: Verbindungsgerade

## Patentansprüche

1. Verbundriemen (1) umfassend eine Decklage (2) und drei mit dieser in Kraft übertragender Weise verbundene Rippen (6), wobei jede Rippe (6) im Querschnitt die Form eines symmetrischen Trapezes besitzt und jeweils mit einer Basis (8) an eine längere Seite eines Rechtecks anschließt, das einen Querschnitt der Decklage (2) bildet, und wobei jede Rippe (6) in einem der Basis (8) zugewandten Oberbau (13) eine Mehrzahl von jeweils parallel zueinander und jeweils in Längsrichtung des Verbundriemens (1) verlaufende Zugstränge (16) zur Aufnahme der von dem Verbundriemen (1) zu übertragenden Längskräfte und in einem der Basis (8) abgewandten Unterbau (14) ein Elastomermaterial aufweist, **dadurch gekennzeichnet, dass** die Länge des Verbundriemens (1) zwischen 3.500 mm und 4.000 mm, die Bruchlast des Verbundriemens (1) 67.500 N und die von dem Verbundriemen (1) im Dauerbetrieb übertragbare Leistung mindestens 75 kW beträgt.

2. Verbundriemen nach Anspruch 1, **dadurch gekennzeichnet, dass** eine maximale Längung des Verbundriemens (1) nach einem Betrieb mit einer von dem Verbundriemen (1) übertragenen Mindestdauerleistung von 75 kW und über einen Zeitraum von 200 Stunden 1 % der ursprünglichen Länge des Verbundriemens (1) beträgt.

3. Verbundriemen nach Anspruch 1 oder 2, **dadurch gekennzeichnet, dass** die Länge zwischen 3.700 mm und 3.900 mm, insbesondere 3.750 mm oder 3.850 mm beträgt.

4. Verbundriemen nach einem der Ansprüche 1 bis 3, **dadurch gekennzeichnet, dass** zumindest ein Teil der Zugstränge (16) Filamente enthält, die zumindest zum Teil aus einem aromatischen Polyamid, insbesondere hochfestem Aramid, und/oder Karbon bestehen.

5. Verwendung eines Verbundriemens (1) gemäß einem der Ansprüche 1 bis 4 in einem Riementrieb (55) eines selbstfahrenden Mähdreschers (20), insbesondere in einem eine Dreschtrommel antreibenden Riementrieb (55).

6. Verwendung nach Anspruch 5, **dadurch gekennzeichnet, dass** der Riementrieb (55) eine als Abtrieb dienende Doppelriemenscheibe (56) aufweist, die mit einer Dreschtrommelwelle (59) gekoppelt ist, wobei der Verbundriemen (1) auf eine einen größeren Durchmesser aufweisende Riemenscheibe (58) der Doppelriemenscheibe (56) wirkt, des Weiteren eine als Antrieb dienende Riemenscheibe (41) aufweist, die zumindest indirekt von einer Brennkraftmaschine antreibbar ist, und eine in einem Leertrum (46) angeordnete Spannrolle (43) aufweist, die vollständig innerhalb einer Hüllkurve (H) des Riementriebs (33) - betrachtet ohne die Spannrolle (43) - angeordnet ist, wobei die Hüllkurve (H) die Riemenscheibe (37) mit dem größeren Durchmesser der Doppelriemenscheibe (35) einhüllt.

7. Verwendung nach Anspruch 6, **dadurch gekennzeichnet, dass** ein Umschlingungswinkel an der den größeren Durchmesser aufweisenden Riemenscheibe (36) der Doppelriemenscheibe (35) größer als 250° und/oder ein Umschlingungswinkel an der mittels der Brennkraftmaschine antreibbaren Riemenscheibe (41) größer als 200° und/oder ein Umschlingungswinkel an der Spannrolle (43) größer als 80° ist.

8. Verwendung nach Anspruch 7, **dadurch gekennzeichnet, dass** ein Abstand (A) der Achse (45) der Spannrolle (43) von einer Verbindungsgeraden (V) zwischen der Achse (40) der Doppelriemenscheibe (35) und der Achse (42) der mittels der Brennkraftmaschine antreibaren Riemenscheibe (41) zum Antrieb der Vorbeschleunigungstrommel kleiner als 120 mm, vorzugsweise kleiner als 100 mm, weiter vorzugsweise zwischen 60 mm und 70mm, beträgt.

9. Riementrieb eines selbstfahrenden Mähdreschers (20), insbesondere ein eine Dreschtrommel antreibender Riementrieb (22, 23), **gekennzeichnet durch** einen Verbundriemen (1) gemäß einem der Ansprüche 1 bis 4.

## Claims

1. A composite belt (1) comprising a cover layer (2) and three ribs (6) connected thereto in a force-transmitting manner, wherein in cross section, each rib (6) has the shape of a symmetrical trapezoid and respectively connects via a base (8) to a longer side of a rectangle which a cross section of the cover layer (2) forms, and wherein, in an upper structure (13) facing the base (8), each rib (6) has a plurality of tension cords (16) which are respectively parallel to each other and respectively extend in the longitudinal direction of the composite belt (1) in order to take up the longitudinal forces to be transmitted by the composite belt (1) and has an elastomeric material in a lower structure (14) facing away from the base (8), **characterized in that** the length of the composite belt (1) is between 3500 mm and 4000 mm, the breaking load of the composite belt (1) is 67500 N and the power which can be transmitted by the composite belt (1) in continuous operation is at least 75 kW.

2. The composite belt according to claim 1, **characterized in that** a maximum elongation of the composite belt (1) after an operation with a minimum continuous power of 75 kW transmitted by the composite belt (1) and over a time period of 200 hours is 1% of the original length of the composite belt (1).

3. The composite belt according to claim 1 or claim 2,
**characterized in that** the length is between 3700 mm and 3900 mm, in particular 3750 mm or 3850 mm.

4. The composite belt according to one of claims 1 to 3,
**characterized in that** at least a portion of the tension cords (16) contains filaments which consist at least in part of an aromatic polyamide, in particular high strength aramid, and/or carbon.

5. Use of a composite belt (1) according to one of claims 1 to 4 in a belt drive (55) of a self-propelled combine harvester (20), in particular in a belt drive (55) driving a threshing drum.

6. The use according to claim 5, **characterized in that** the belt drive (55) has a double belt pulley (56) serving as the output, which is coupled to a threshing drum shaft (59), wherein the composite belt (1) acts on a belt pulley (58) of the double belt pulley (56) which has a larger diameter, and furthermore has a belt pulley (41) acting as the drive, which can be driven at least indirectly by a combustion engine and has a tensioning roller (43) disposed in a slack side (46) which is disposed entirely within an envelope (H) of the belt drive (33) - considered without the tensioning roller (43) -, wherein the envelope (H) wraps around the belt pulley (37) of the double belt pulley (35) with the larger diameter.

7. The use according to claim 6, **characterized in that** a wrap angle at the belt pulley (36) of the double belt pulley (35) with the larger diameter is greater than 250° and/or a wrap angle at the belt pulley (41) which can be driven by means of the internal combustion engine is greater than 200° and/or a wrap angle at the tensioning roller (43) is greater than 80°.

8. The use according to claim 7, **characterized in that** a distance (A) of the axis (45) of the tensioning roller (43) from a straight connecting line (V) between the axis (40) of the double belt pulley (35) and the axis (42) of the belt pulley (41) for driving the pre-acceleration drum which can be driven by means of the combustion engine is less than 120 mm, preferably less than 100 mm, more preferably between 60 mm and 70 mm.

9. A belt drive for a self-propelled combine harvester (20), in particular a belt drive (22, 23) driving a threshing drum,
**characterized by** a composite belt (1) in accordance with one of claims 1 to 4.

## Revendications

1. Courroie composite (1) comprenant une couche de recouvrement (2) et trois nervures (6) reliées à celle-ci de manière à transmettre des forces, chaque nervure (6) présentant en coupe transversale la forme d'un trapèze symétrique et se raccordant respectivement avec une base (8) à un grand côté d'un rectangle qui forme une section transversale de la couche de recouvrement (2), et chaque nervure (6) présentant, dans une partie supérieure (13) tournée vers la base (8), une pluralité de tiges de traction (16) qui s'étendent parallèlement les unes aux autres et chacune dans le sens longitudinal de la courroie composite (1) et sont destinées à absorber les forces longitudinales devant être transmises par la courroie composite (1), et présentant un matériau élastomère dans une partie inférieure (14) éloignée de la base (8), **caractérisée en ce que** la longueur de la courroie composite (1) est comprise entre 3 500 mm et 4 000 mm, la charge de rupture de la courroie composite (1) est de 67 500 N, et la puissance pouvant être transmise par la courroie composite (1) en service continu est d'au moins 75 kW.

2. Courroie composite selon la revendication 1, **caractérisée en ce qu'**un allongement maximal de la courroie composite (1), après un fonctionnement avec une puissance permanente minimale de 75 kW transmise par la courroie composite (1) et pendant une durée de 200 heures, est de 1 % de la longueur initiale de la courroie composite (1).

3. Courroie composite selon la revendication 1 ou 2, **caractérisée en ce que** la longueur est comprise entre 3 700 mm et 3 900 mm, notamment 3 750 mm ou 3 850 mm.

4. Courroie composite selon une des revendications 1 à 3, **caractérisée en ce qu'**au moins une partie des tiges de traction (16) contient des filaments qui sont constitués au moins en partie d'un polyamide aromatique, notamment d'aramide à haute résistance, et/ou de carbone.

5. Utilisation d'une courroie composite (1) selon une des revendications 1 à 4, dans une transmission à courroie (55) d'une moissonneuse-batteuse (20) automotrice, notamment dans une transmission à courroie (55) entraînant un tambour batteur.

6. Utilisation selon la revendication 5, **caractérisée en ce que** la transmission à courroie (55) présente une double poulie à courroie (56) qui sert de moyen mené et est couplée à un arbre de tambour batteur (59), la courroie composite (1) agissant sur une poulie à courroie (58) de plus grand diamètre de la double poulie à courroie (56), et présente en outre une poulie à courroie (41) qui sert de moyen d'entraînement et peut être entraînée au moins indirectement par un moteur à combustion interne, et présente une poulie de tension (43) qui est placée dans un brin mou (46) et est disposée complètement à l'intérieur d'une courbe enveloppe (H) de la transmission à courroie (33) - vu sans la poulie de tension (43) -, la courbe enveloppe (H) enveloppant la poulie à courroie (37) de plus grand diamètre de la double poulie à courroie (35).

7. Utilisation selon la revendication 6, **caractérisée en ce qu'**un angle d'enroulement sur la poulie à courroie (36) de plus grand diamètre de la double poulie à courroie (35) est supérieur à 250° et/ou un angle d'enroulement sur la poulie à courroie (41) pouvant être entraînée par un moteur à combustion interne est supérieur à 200° et/ou un angle d'enroulement sur la poulie de tension (43) est supérieur à 80°.

8. Utilisation selon la revendication 7, **caractérisée en ce qu'**une distance (A) de l'axe (45) de la poulie de tension (43) par rapport à une droite de liaison (V) entre l'axe (40) de la double poulie à courroie (35) et l'axe (42) de la poulie à courroie (41), pouvant être entraînée par un moteur à combustion interne, pour l'entraînement du tambour de pré-accélération est inférieure à 120 mm, de préférence inférieure à 100 mm, et est en outre de préférence comprise entre 60 mm et 70 mm.

9. Transmission à courroie d'une moissonneuse-batteuse (20) automotrice, notamment une transmission à courroie (22, 23) entraînant un tambour batteur, **caractérisée en ce qu'**elle comprend une courroie composite (1) selon une des revendications 1 à 4.
